# EUROPEAN PATENT APPLICATION

(11) **EP 4 520 641 A1**
(43) Date of publication of application: **12.03.2025**
(21) Application number: 24194960.1
(22) Date of filing: 16.08.2024
(51) Int. Cl.: B62D 53/12

(54) **FIFTH WHEEL SYSTEMS AND ACTUATORS FOR MOVING STOP RODS**

(30) Priority: 17.08.2023 US 202363520262 P
(71) Applicant: Fontaine Fifth Wheel Company, Jasper, AL 35501 (US)
(72) Inventor: Alldredge, Steven, Cullman, 35055 (US)
(74) Representative: Håmsø Patentbyrå AS

(57) **Abstract**

A fifth wheel system includes a fifth wheel configured to couple to a kingpin of a towed trailer. The fifth wheel includes a jaw configured to engage the kingpin, a wedge movable from an unlocked position to a locked position to urge the jaw into engagement with the kingpin, and a stop rod that sets a travel distance the wedge moves between the unlocked position and the locked position. An actuator adjusts position of the stop rod to thereby adjust the travel distance.

## Description

### CROSS-REFERENCE TO RELATED APPLICATION

The present disclosure is based on and claims priority to U.S. Provisional Patent Application No. 63/520,262 filed August 17, 2023, the disclosure of which is incorporated herein by reference.

### FIELD

The present disclosure relates to fifth wheels, and specifically to adjusting stop rods of fifth wheels.

### BACKGROUND

The following U.S. Patents and U.S. Patent Application Publication are incorporated herein by reference in entirety.

U.S. Patent No. 8,210,558 discloses a secondary lock assembly for a fifth wheel, where the fifth wheel includes a hitch plate with a rearward opening slot to receive a trailer kingpin and a transversely sliding primary locking member for retaining the kingpin within the slot. The assembly comprises a tie bar pivotally connected at its middle to the primary locking member and a transversely oriented pull bar pivotally connected at an inner end to the forward end of the tie bar.

U.S. Patent No. 11,524,536 discloses apparatuses, systems, and methods for determining and verifying operational states of fifth wheels. Certain methods for determining the operational state of the fifth wheel may include sensing, with at least one sensor, magnetic flux caused by a magnet on a movable component movable to lock the fifth wheel to a kingpin of a towed vehicle and determining an end position of the movable component based on the magnetic flux. The end position of the movable component is then compared to a threshold position and an operational state of the fifth wheel is determined based on the comparison of the end position of the movable component to the threshold position.

U.S. Patent Application Publication No. 2015/0158535 discloses a fifth wheel having a top plate with a throat that is adapted to receive a kingpin of a trailer. The fifth wheel is equipped with a locking mechanism including a jaw slidably connected to the top plate and slidable between a closed position where the jaw blocks passage of a kingpin out of the throat of the fifth wheel and an open position where a kingpin may pass into and out of the throat of the fifth wheel.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

In certain examples, a fifth wheel system includes a fifth wheel configured to couple to a kingpin of a towed trailer. The fifth wheel includes a jaw configured to engage the kingpin, a wedge movable from an unlocked position to a locked position to urge the jaw into engagement with the kingpin, and a stop rod that sets a travel distance the wedge moves between the unlocked position and the locked position. An actuator adjusts position of the stop rod to thereby adjust the travel distance.

In independent aspects, the stop rod extends along an axis and the actuator axially moves the stop rod. In independent aspects, the actuator axially translates the stop rod. In independent aspects, the actuator moves the stop rod in a first axial direction to decrease the travel distance and a second axial direction to decrease the travel distance. In independent aspects, the actuator is a linear actuator. In independent aspects, a top plate covers the actuator. In independent aspects, a bracket links the actuator to the stop rod. In independent aspects, the actuator is laterally offset from the stop rod. In independent aspects, the fifth wheel includes a frame and the actuator is pivotably coupled to the frame at a first axis. In independent aspects, a control system controls the actuator to move the stop rod. In independent aspects, the control system is configured to count adjustments to the travel distance. In independent aspects, the control system is configured to generate an alert when number of adjustments to the travel distance is greater than a predetermined number. In independent aspects, the control system interfaces with an operator input device which is configured to receive an input to adjust position of the stop rod. In independent aspects, a vibration sensor is configured to sense vibrations generated by the fifth wheel and generate vibration data and the control system is configured to control the actuator to thereby move the stop rod and increase the travel distance when the control system determines that the vibration data contains a predetermined vibration component that corresponds to slack between the kingpin and the fifth wheel.

In certain examples, a fifth wheel system includes a fifth wheel configured to couple to a kingpin of a towed trailer includes a fifth wheel having a jaw configured to engage the kingpin, a wedge movable from an unlocked position to a locked position to urge the jaw into engagement with the kingpin, and a stop rod that engages the wedge in the locked position. An actuator adjusts position of the stop rod to thereby adjust the locked position of the wedge.

In independent aspects, the stop rod extends along an axis and the actuator axially moves the stop rod. In independent aspects, the actuator axially translates the stop rod. In independent aspects, the fifth wheel includes a throat through which the kingpin is received, and the actuator moves the stop rod in a first axial direction to move the locked position toward the throat and a second axial direction to move the locked position away from the throat. In independent aspects, the actuator is a linear actuator. In independent aspects, a top plate covers the actuator. In independent aspects, a bracket links the actuator to the stop rod. In independent aspects, the actuator is laterally offset from the stop rod. In independent aspects, the fifth wheel includes a frame and the actuator is pivotably coupled to the frame at a first axis. In independent aspects, a control system controls the actuator to move the stop rod. In independent aspects, the control system is configured to count adjustments to the locked position. In independent aspects, the control system is configured to generate an alert when a number of adjustments to the locked position is greater than a predetermined maximum allowable adjustment. In independent aspects, the control system interfaces with an operator input device which is configured to receive an input to adjust the position of the stop rod. In independent aspects, a vibration sensor is configured to sense vibrations generated by the fifth wheel and generate vibration data and the control system is configured to control the actuator to thereby move the stop rod and change the locked position of the wedge when the control system determines that the vibration data contains a predetermined vibration component that corresponds to slack between the kingpin and the fifth wheel.

In certain examples, a method of coupling a fifth wheel to a kingpin of a towed vehicle includes the steps of receiving the kingpin into the fifth wheel such that a jaw is moved into a locked position to lock the kingpin in the fifth wheel, adjusting position of a stop rod, with an actuator, to set a travel distance of a wedge between an unlocked position and a locked position, and moving the wedge along the travel distance when the kingpin is received into the fifth wheel to thereby urge the jaw into engagement with the kingpin.

In independent aspects, the adjusting position of the stop rod includes axially moving the stop rod along an axis along which the stop rod extends. In independent aspects, the actuator translates the stop rod. In independent aspects, the adjusting position of the stop rod includes moving the stop rod in a first axial direction to decrease the travel distance or a second axial direction to decrease the travel distance. In independent aspects, the method includes controlling the actuator with a control system to thereby move the stop rod. In independent aspects, the method includes counting, with the control system, number of adjustments to the travel distance. In independent aspects, the method includes generating an alert when number of adjustments to the travel distance is greater than a predetermined maximum allowable adjustment. In independent aspects, the method includes determining, with the control system, a stop rod adjustment distance based on adjustments to the stop rod. In independent aspects, the method includes determining if a jaw of the fifth wheel is in an open position or a closed position, moving the actuator such that the stop rod is in an initial stop rod position when the jaw is in the open position, and moving the actuator such that the stop rod is in a predetermined stop rod position when the jaw is in the closed position.

In certain examples, a method of coupling a fifth wheel to a kingpin of a towed vehicle includes the steps of sensing vibration from the fifth wheel, comparing the sensed vibration with predetermined vibration data to determine if there is slack between the kingpin and a jaw of the fifth wheel, and moving a stop rod with an actuator if the sensed vibration is different than the predetermined vibration data to thereby permit increased travel distance of a wedge that engages the jaw to remove slack between the jaw and the kingpin.

In independent aspects, the method includes generating an alert when the sensed vibration is different than the predetermined vibration data or when the moving the stop rod.

In certain examples, a method of coupling a fifth wheel to a kingpin of a towed vehicle including the steps of moving a stop rod with an actuator, sensing current as the actuator moves the stop rod such that when the sensed current increases above a threshold current the actuator moves the stop rod a preset incremental movement and when the sensed current does not increase above the threshold current the actuator continuously moves the stop rod until the sensed current increases above the threshold current.

In certain examples, a fifth wheel system includes a fifth wheel configured to couple to a kingpin of a towed trailer, the fifth wheel having a wedge configured to move a travel distance and urge a jaw into engagement with the kingpin and a stop rod configured to stop movement of the wedge and an actuator assembly that changes the position of the stop rod to thereby adjust travel distance of the wedge.

In certain examples, a method for changing position of a stop rod of a fifth wheel having a wedge includes the steps of determining, with a control system, a travel distance of the wedge should be increased to take up slack between the fifth wheel and a kingpin and actuating an actuator to adjust the position of the stop rod to thereby increase the travel distance of the wedge and take up additional slack between the fifth wheel and the kingpin

In certain examples, a method for monitoring position of a stop rod of a fifth wheel includes the steps of determining, with a control system, initial position of the stop rod, actuating an actuator to adjust position of the stop rod, determining an end position of the stop rod, and indicating maintenance status of the fifth wheel based on the end position of the wedge stop rod in comparison to a maximum adjustment distance.

In certain examples, an actuator assembly for a fifth wheel having a stop rod that defines a locked position or travel distance of a wedge and being configured to couple to a kingpin of towed trailer includes a bracket configured to be coupled to the stop rod and an actuator coupled to the bracket and configured to move the bracket and thereby the stop rod to thereby adjust the locked position of the wedge or a travel distance of the wedge.

In independent aspects, the actuator is configured to pivotably coupled to the fifth wheel. In independent aspects, the actuator is configured to axially translates the stop rod. In independent aspects, a base is coupled to the actuator and configured to pivotably couple to the fifth wheel. In independent aspects, the actuator is configured to interface with an operator interface device that receives an input for adjusting position of the stop rod. In independent aspects, a control system controls the actuator based on the input.

Various other features, objects, and advantages will be made apparent from the following description taken together with the drawings.

### BRIEF DESCRIPTION OF THE DRAWINGS

The present disclosure is described with reference to the following Figures. The same numbers are used throughout the Figures to reference like features and like components.
Fig. 1 is a perspective view of an example fifth wheel system according to the present disclosure.
Fig. 2 is a partial schematic of the fifth wheel system shown in Fig. 1.
Fig. 3 is a perspective view of an example actuator assembly according to the present disclosure.
Fig. 4 is a schematic view of an example control system according to the present disclosure.
Fig. 5 is an example operational sequence according to the present disclosure.
Fig. 6 is a partial schematic of another example fifth wheel system according to the present disclosure.
Fig. 7 is a partial schematic of another example fifth wheel system according to the present disclosure.
Fig. 8 is another example operational sequence according to the present disclosure.
Fig. 9 is a perspective view of an example operator input device according to the present disclosure.
Fig. 10 is a perspective view of another example operator input device according to the present disclosure.
Fig. 11 is an example operational sequence according to the present disclosure

### DETAILED DESCRIPTION

It is known to connect a towed trailer to a towing vehicle via a connection assembly commonly referred to as a fifth wheel. A fifth wheel is a locking assembly on the towing vehicle that engages a kingpin of the towed trailer to thereby securely couple the towing vehicle to the towed trailer. Fifth wheels are constructed to avoid/prevent inadvertent disengagement of the kingpin from the fifth wheel.

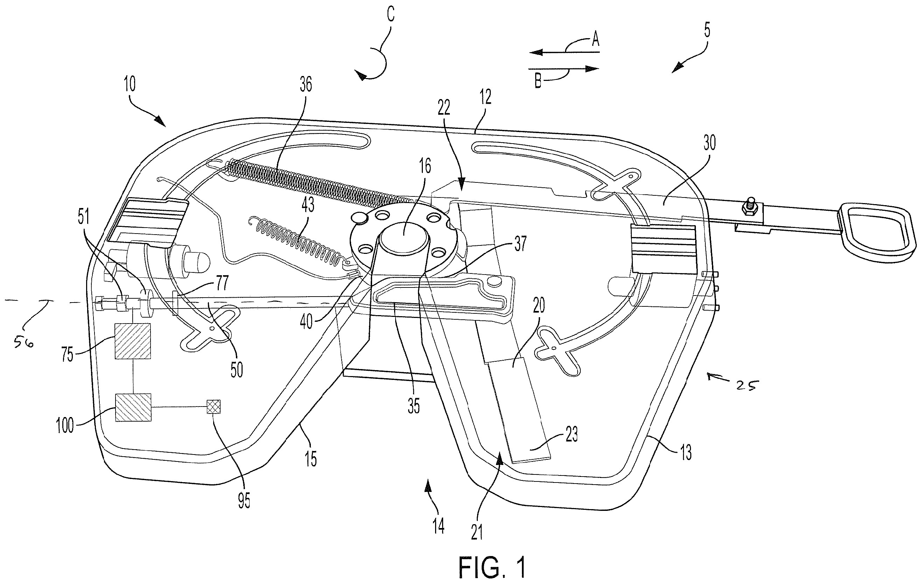

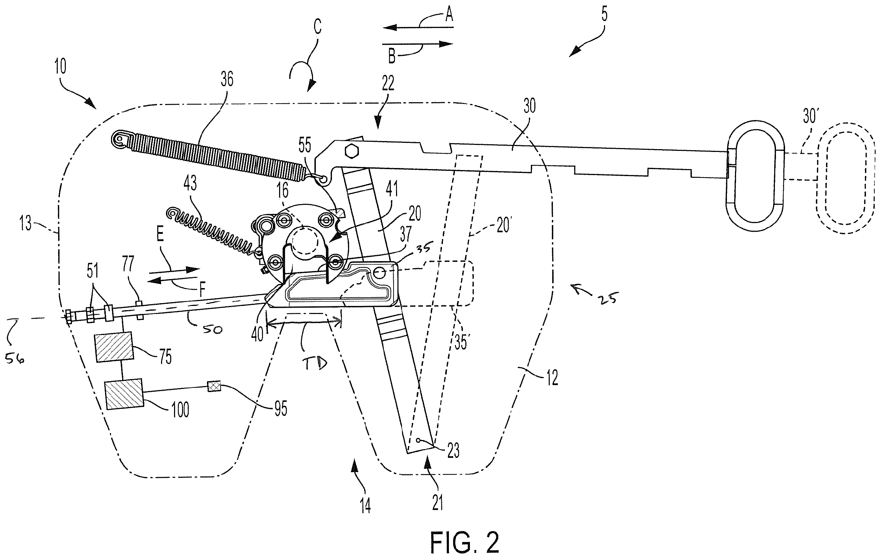

Fig. 1 is a perspective view of an example fifth wheel system 5 according to the present disclosure, and Fig. 2 is a schematic top-down plan view of the example fifth wheel system 5. The system 5 includes a fifth wheel 10 having a top plate 12 and a perimeter flange 13. The fifth wheel 10 can further include a bottom plate 15 (Fig. 1) coupled to the top plate 12. The plates 12, 15 and the flange 13 collectively define a protected space in which operable components of the fifth wheel 10 are at least partially positioned. Note that the plates 12, 15 and the perimeter flange 13 are depicted as transparent in Fig. 1 and schematically outlined in dash-dot lines in Fig. 2. Note that the top plate 12, the flange 13, and/or the bottom plate 15 can be referred to collectively as a frame 25 of the fifth wheel 10. Note that the frame 25 can further include other members (e.g., plates, ribs, stiffeners) that form the structural support of the fifth wheel 10.

The fifth wheel 10 further defines a throat 14 into which a kingpin 16 (the kingpin 16 is depicted in dashed lines in Fig. 2) of a towed trailer (not shown) is received. Note that Fig. 1 depicts the kingpin 16 received into the fifth wheel 10.

The fifth wheel 10 includes several moveable components, such as an operating arm 20, a pull handle 30, a wedge 35, and a jaw 40 (each described hereinbelow) which are movable as the fifth wheel 10 is operated and the fifth wheel 10 couples or uncouples from the kingpin 16. Reference is made to above-incorporated U.S. Patent Nos. 8,210,558 and 11,524,536 which disclose examples of conventional fifth wheels having example moveable components and/or features that may be incorporated with any of the example fifth wheels 10 of the present disclosure.

The operating arm 20 is pivotally connected to the top plate 12 (Fig. 1) at a pivot axis 23 via a mechanical fastener such as a pin or bolt. The operating arm 20 has a first end 21 pivotally coupled to the top plate 12 at the pivot axis 23, and the operating arm 20 has a second end 22 opposite the first end 21 that is pivotably coupled to the handle 30. The handle 30 can be engaged and/or pulled by the operator (described herein below). A spring 36 (e.g., coil spring) biases (e.g., pulls) the operating arm 20 toward the throat 14 in a first direction (see arrow A).

The wedge 35 is coupled to the operating arm 20 between the end 21, 22, and the wedge 35 moves with the operating arm 20. In certain examples, the wedge 35 is pivotally coupled to the operating arm 20. The wedge 35 has an angled side 37 that engages the jaw 40 (described in greater detail hereinbelow).

In operation, the operator pulls the handle 30 to pivot the operating arm 20 from a locked position (see solid lines of the operating arm 20 in Fig. 2) to an unlocked position (see dashed line of the operating arm 20' in Fig. 2). Specifically, the operator pulls the pull handle 30 in a second direction (see arrow B) against the bias of the spring 36 such that the operating arm 20 pivots away from the throat 14 and toward the unlocked position. At the same time, the wedge 35 is moved with the operating arm 20 away from the throat 14 (see dashed line of the wedge 35' in Fig. 2). Once the operator pulls the pull handle 30 a predetermined distance, the operator latches and releases the pull handle 30 such that the pull handle 30 does not pivot back to the locked position (Fig. 1). Instead, the operating arm 20 and the wedge 35 remain in the unlocked positions (see dashed line depiction of the operating arm 20' and the wedge 35') until the kingpin 16 is received into the fifth wheel 10 via the throat 14 (described in greater detail hereinbelow).

Note that as the wedge 35 and operating arm 20 are moved into the unlocked positions (as described above), a spring 43 causes the jaw 40 to rotate or pivot (e.g. see example rotation of the jaw 40 depicted by arrow C) into a receiving position in which an opening 41 (Fig. 2) of the jaw 40 is oriented toward the throat 14. The spring 43 holds the jaw 40 in the unlocked position (may be referred to as the open position herein) until the kingpin 16 engages the jaw 40. As such, the fifth wheel 10 is in an unlocked position or an open position. An example travel distance TD that wedge 35 moves between the unlocked position (see wedge 35') and the locked position (see wedge 35) is depicted in Fig. 2.

To couple the fifth wheel 10 to the kingpin 16, the fifth wheel 10 is moved toward the kingpin 16 such that the kingpin 16 passes through throat 14 and the opening 41 in the jaw 40. The kingpin 16 engages the jaw 40 causing the jaw 40 to rotate against the forces applied thereto by the spring 43 such that the jaw 40 closes around the kingpin 16 into a locked position (may be referred to as the closed position herein). The rotation of the jaw 40 causes the wedge 35 and/or the operating arm 20 to become unblocked and/or unlatched and/or the handle 30 to be unlatched. As, such, the wedge 35 and/or the operating arm 20 moves toward the throat 14 (e.g., rotation of the jaw 40 unblocks and releases the wedge 35 and/or the operating arm 20 which are blocked from moving toward the throat 14 by the jaw 40 when the fifth wheel 10 is in the unlocked position). The spring 36 pulls the operating arm 20 toward the locked position (Fig. 1) such that the wedge 35 is moved (e.g., slides) along and acts on the jaw 40 to urge the jaw 40 toward and/or into engagement with the kingpin 16. Specifically, the angled side 37 of the wedge 35 acts on the jaw 40 as the wedge 35 moves in the first direction (see arrow A). As such, the fifth wheel 10 is in the closed position (as depicted in Figs. 1-2) with the fifth wheel 10 locked onto the kingpin 16.

The wedge 35 is moved in the first direction (arrow A) until the wedge 35 engages a stop rod 50 that is secured to the top plate 12 and/or the flange 13. The stop rod 50 is movable into different positions to thereby change the location at which movement of the wedge 35 in the first direction (arrow A) is stopped. The stop rod 50 extends along a longitudinally extending axis 56 and is configured to be moved axially by an example actuator assembly 75 (described in greater detail herein) of the fifth wheel system 5.

In certain examples, the stop rod 50 includes screw threads and the stop rod 50 is coupled to one or more nuts 51 having screw threads. The stop rod 50 is axially moved by rotating the stop rod 50 about the axis 56. The nuts 51 may be fixed relative to the throat 14 and/or provide limits on the axial movement of the stop rod 50. In other examples, the stop rod 50 is translated along the axis 56. In certain examples, the fifth wheel 10 includes an operating arm limit member 55 that stops movement of the operating arm 20 in the first direction (arrow A).

The present inventors have observed that over time and operation of conventional fifth wheels one or more moveable components of the fifth wheel may wear and accordingly slack between the kingpin and the jaw may increase, operator comfort may decrease due to increased vibrations, and/or the fifth wheel may not fully or properly couple to the kingpin. Furthermore, the present inventors have observed that when the components of the fifth wheel and/or the kingpin wear, 'slack' (described in further detail herein below) may exist between the kingpin and the jaw that affects the operation of the fifth wheel and/or operator comfort. For example, the portion of the jaw that normally engages the kingpin may wear and thus the wedge may not be able to move the jaw far enough into engagement with the kingpin to 'take up the slack' and thereby maintain proper engagement therebetween while the towing vehicle tows the towed vehicle. The kingpin could also be worn and contribute to the problem of slack between the jaw and the kingpin and/or decreased operator comfort.

To account for wear of one or more components, conventional stop rods of conventional fifth wheels can be manually adjusted to permit further movement / travel distance of the wedge which increases engagement between the wedge and the jaw and/or urging of the jaw further toward the kingpin. For example, the stop rod is moved away from the throat of the fifth wheel to increase the travel distance of the wedge and engagement between the wedge and the jaw. Manufacturers of conventional fifth wheels provide adjustment instructions/procedures to operators such that the conventional fifth wheels may be manually adjusted one or more times (e.g., the maximum number of adjustments may be four or five adjustments). After the conventional fifth wheel has been adjusted a predetermined maximum number of times (e.g., five adjustments), the manufacturers often suggest servicing or rebuilding the conventional fifth wheel. The manufacturers may also provide guidance regarding how often to adjust the conventional fifth wheel and/or when the conventional fifth wheel should be serviced or rebuilt.

The present inventors recognized that it would be advantageous to develop the fifth wheel systems of the present disclosure that have actuators for moving the stop rod and/or that automatically adjust the position of the stop rod, without the need for manual adjustment. Fifth wheel systems that adjust the position of the stop rod based on sensed characteristics of the fifth wheel would also be desirable. These new systems of the present disclosure would advantageously permit precise adjustment of the stop rod and/or eliminate adjustment errors caused during manual adjustment.

In addition, the present inventors recognized that it would also be advantageous to develop fifth wheel systems of the present disclosure that monitor and/or sense characteristics of the fifth wheel (e.g., vibrations generated by the fifth wheel when coupled to a kingpin) to thereby collect data and modify the operation of the fifth wheel and/or the towing vehicle based on the sensed characteristics. For example, the slack, which is generally known in the industry as spacing or 'play' between the jaw and the kingpin when the jaw is closed around the kingpin such that the kingpin moves relative to the jaw, between the fifth wheel and the kingpin may lead to 'loose' connection between the fifth wheel and the kingpin and generation of vibrations the kingpin moves within the jaw and contacts the sides of the jaw. The vibrations could decrease operator/driver comfort.

Accordingly, the present inventors developed the systems and method described herein that adjust the position of the stop rod and/or monitor characteristics of the fifth wheel.

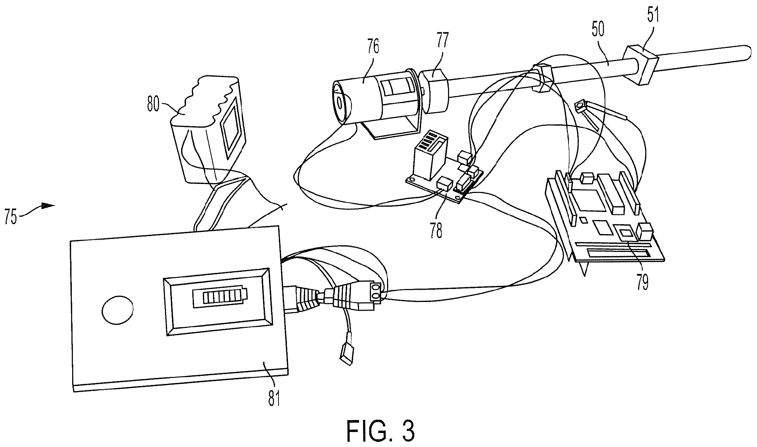

Figs. 1-2 schematically depicts an example actuator assembly 75 according to the present disclosure that is configured to selectively move the stop rod 50. The actuator assembly 75 is coupled to at least one of the top plate 12, the flange 13, and the bottom plate 15. The actuator assembly 75 has an actuator 76 (Fig. 3) that engages and moves (e.g., rotates, translates) the stop rod 50 to thereby change the position to the stop rod 50 relative to the throat 14. The type of actuator can vary, and suitable types of actuators include motors, linear actuators, and pistons. In one example, the actuator 76 includes a 12.0 volt direct current (DC) motor that rotates the stop rod 50 about its longitudinal axis to thereby cause axial movement of the stop rod 50 toward or away from the throat (see arrows E and F). As such, the motor changes the position of the stop rod 50 relative to throat 14 to thereby adjust the locked position of the wedge 35 and/or adjust the travel distance TD of the wedge 35 when moving from the unlocked position to the locked position. For example, when the stop rod 50 is moved in a first axial direction (see arrow E) toward the throat 14, the travel distance TD that wedge 35 moves between the unlocked position (see wedge 35') and the locked position (see wedge 35) decreases and the portion of the wedge 35 that engages the jaw 40 decreases. In addition, when the stop rod 50 is moved in a second axial direction (see arrow F) away from the throat 14 the travel distance TD increases and the portion of the wedge 35 that engages the jaw 40 increases.

Referring now to Fig. 3, another example of the actuator assembly 75 according to the present disclosure is depicted. For clarity, the example actuator assembly 75 is depicted decoupled from the fifth wheel and an example stop rod 50 is coupled to the actuator assembly 75. The actuator assembly 75 includes the actuator 76 which in this example is a 12V DC motor coupled to the end of the stop rod 50. The actuator 76 is axially coupled to the stop rod 50. In these examples, the length of the stop rod 50 may be shorter than the length of conventional stop rods. A threaded nut 51 is between the axial ends of the stop rod 50, and the nut 51 is fixed to one or the top plate 12, the flange 13, and the bottom plate 15 (Fig. 1). In this example, as the actuator 76 (e.g., motor) rotates the stop rod 50, the position of the stop rod 50 axially moves in a first axial direction (see arrow E) or a second axial direction (see arrow F) corresponding to rotation of the stop rod 50 (e.g., clockwise rotation of the stop rod 50 results in axial movement of the stop rod 50 toward the throat 14).

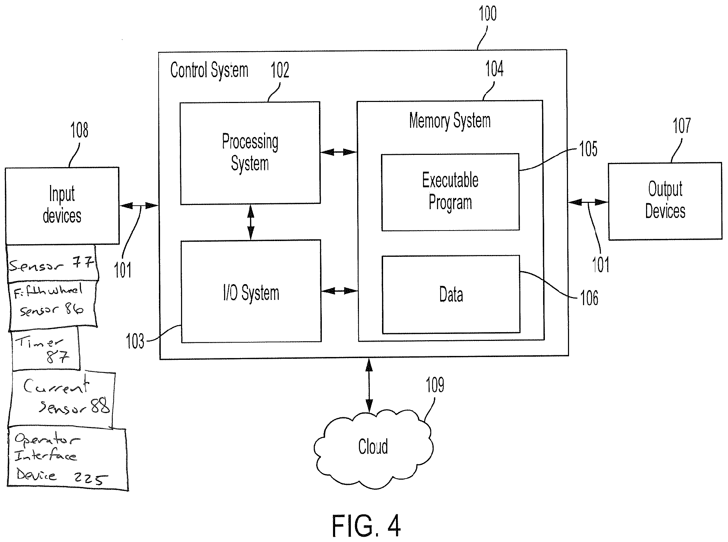

The actuator assembly 75 includes a sensor 77 configured to sense movement of the stop rod 50 (e.g., rotation of the stop rod 50, axial travel distance of the stop rod 50). Note that in other examples, the sensor 77 is part of and/or integral with the actuator 76. The sensor 77 is configured to send signals to a control system 100 (Fig. 4) that correspond to the rotation and/or axial travel distance of the stop rod 50. The type of sensor 77 can vary, and in some examples, the sensor 77 is a length sensor, a physical switch that replaces or is used in addition to the sensor 77, an inductive sensor, a proximity sensor, and/or the like.

For the example actuator assembly 75 depicted in Fig. 3, the actuator assembly 75 includes a motor drive 78 and a printed circuit board (PCB) 79 that are each electrically coupled to the actuator 76. A battery 80 (e.g., battery pack with rechargeable power cells) provides electrical power to the actuator assembly 75. Optionally, the actuator assembly 75 includes a switch and battery monitor device 81 having an operator display panel. The display panel indicates system information to the operator. In other examples, the actuator assembly 75 is electrically coupled to the control system of the towing vehicle. In certain examples, the actuator assembly 75 is powered by the electrical system of the towing vehicle or the towed vehicle. In these examples, data can be exchanged or transmitted (e.g., wired or wireless connections) between the towing vehicle and the fifth wheel system 5 and the operator can view the status of the fifth wheel system 5 and/or control the fifth wheel system 5 from within the cab or remotely (e.g., maintenance facility).

Referring now to Fig. 4, the control system 100 is configured to control and adjust the operation of the fifth wheel 10 and/or the actuator assembly 75 (e.g., changing the position of the stop rod 50). Fig. 4 depicts an example control system 100 according to the present disclosure.

Certain aspects of the present disclosure are described or depicted as functional and/or logical block components or processing steps, which may be performed by any number of hardware, software, and/or firmware components configured to perform the specified functions. For example, certain embodiments employ integrated circuit components, such as memory elements, digital signal processing elements, logic elements, look-up tables, or the like, configured to carry out a variety of functions under the control of one or more processors or other control devices. The connections between functional and logical block components are merely exemplary, which may be direct or indirect, and may follow alternate pathways.

In certain examples, the control system 100 communicates with each of the one or more components of the fifth wheel 10, the actuator assembly 75, and/or the towing vehicle (not depicted) via a communication link 101, which can be any wired or wireless link. The control system 100 is capable of receiving information and/or controlling one or more operational characteristics of the fifth wheel 10, the actuator assembly 75, and/or the towing vehicle and its various sub-systems by sending and receiving control signals via the communication links 101. In one example, the communication link 101 is a controller area network (CAN) bus; however, other types of links could be used. It will be recognized that the extent of connections and the communication links 101 may in fact be one or more shared connections, or links, among some or all of the components in the fifth wheel system 5. Moreover, the communication link 101 lines are meant only to demonstrate that the various control elements are capable of communicating with one another, and do not represent actual wiring connections between the various elements, nor do they represent the only paths of communication between the elements. Additionally, the fifth wheel 10, the actuator assembly 75, and/or the towing vehicle may incorporate various types of communication devices and systems, and thus the illustrated communication links 101 may in fact represent various different types of wireless and/or wired data communication systems.

The control system 100 may be a computing system that includes a processing system 102, memory system 104, and input/output (I/O) system 103 for communicating with other devices, such as input devices 108 (e.g., sensor 77 depicted in Fig. 3, operator interface devices 225, fifth wheel sensor 86, timer 87, current sensor 88) and output devices 107 (e.g., actuator 76 depicted in Fig. 3), either of which may also or alternatively be stored in a cloud 109. Note that the operator interface device 225 can be an input device and/or an output device. The processing system 102 loads and executes an executable program 105 from the memory system 104, accesses data 106 stored within the memory system 104, and directs the fifth wheel 10 and/or the actuator 76 to operate as described in further detail below.

The processing system 102 may be implemented as a single microprocessor or other circuitry, or be distributed across multiple processing devices or sub-systems that cooperate to execute the executable program 105 from the memory system 104. Non-limiting examples of the processing system include general purpose central processing units, application specific processors, and logic devices.

The memory system 104 may comprise any storage media readable by the processing system 102 and capable of storing the executable program 105 and/or data 106. The memory system 104 may be implemented as a single storage device, or be distributed across multiple storage devices or sub-systems that cooperate to store computer readable instructions, data structures, program modules, or other data. The memory system 104 may include volatile and/or non-volatile systems, and may include removable and/or non-removable media implemented in any method or technology for storage of information. The storage media may include non-transitory and/or transitory storage media, including random access memory, read only memory, magnetic discs, optical discs, flash memory, virtual memory, and non-virtual memory, magnetic storage devices, or any other medium which can be used to store information and be accessed by an instruction execution system, for example.

As noted above, the sensor 77 is for sensing movement of the stop rod 50. In one example operation, the operator inputs a desired change to the position of the stop rod 50 via an operator interface device 225. The control system 100 sends a corresponding control signal to the actuator assembly 75 to move the stop rod 50. The control system 100 also receives corresponding signals from the sensor 77 and utilizes the signals from the sensor 77 to verify that the stop rod 50 has moved to the position chosen by the operator. For instance, the control system 100 compares the signals from the sensor 77 to one or more algorithms and/or lookup tables to determine a rotation value (e.g., length of rotation in inches) or a travel distance (e.g., axial length of travel in inches) of the stop rod 50. Based on the determined value, the control system 100 alerts the operator (e.g., provides visual feedback that the desired change in position of the stop rod 50 has occurred). In other examples, the control system 100 receives feedback signals from the actuator 76 which are used to determine when a movement limit of the stop rod 50 has been reached. Note that the signals from the sensor 77 and/or other components of the actuator assembly 75 can be transmitted to other devices (e.g., personal cell phone, screen in the cab of the towing vehicle) via wireless connections and/or data communication systems (e.g., telematic connections). The signals can include log data pertaining to operation of the actuator assembly 75.

In other examples, the control system 100 is coupled to a vibration sensor 95 (Fig. 2) which is configured to sense vibration and provide vibration data or signals to the control system 100. Note that the vibration sensor 95 can be part of the fifth wheel, the actuator assembly 75, the towed vehicle, or the towing vehicle. Further note that any of the features of the vibration sensor or control systems described in the above-incorporated U.S. Patent No. 11,524,536 can be utilized with the vibration sensor 95 and/or the control system 100 of the present disclosure. The vibration sensor 95 senses vibrations generated by the fifth wheel 10 when coupled to the kingpin 16. In the instance of coupling between the fifth wheel 10 and the kingpin 16 and transport of the vehicles over the road, the vibration sensor 95 may sense vibrations as the fifth wheel 10 is locked onto the kingpin 16. The control system 100 compares the vibration signals to predetermined vibration components (e.g., frequency, amplitude), patterns, or values that are stored on the memory system 104, and if the sensed vibration signals differ or are greater than the predetermined vibration patterns or values, the control system 100 determines that the vibrations are likely caused by slack between the jaw 40 and the kingpin 16. The control system 100 is then configured to initiate a program stored on the memory system 104 to control the actuator assembly 75 to automatically adjust the position of the stop rod 50 and take up the slack thereby changing the vibrations sensed by the vibration sensor 95.

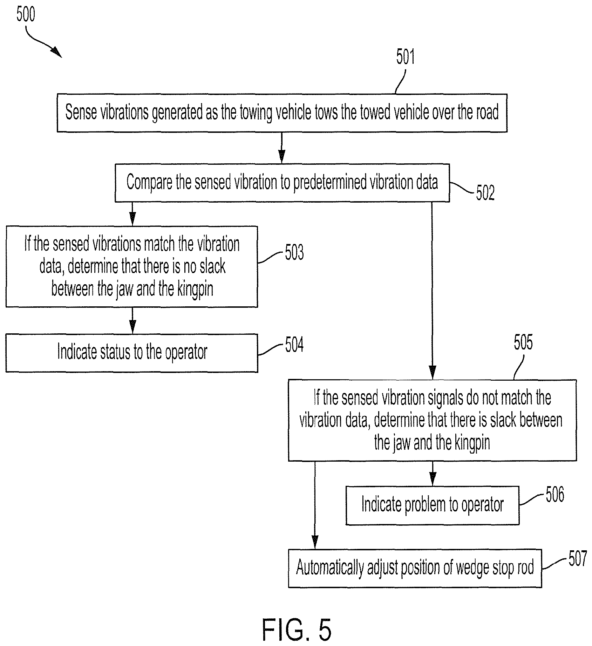

In one specific example, the vibration sensor 95 is configured to sense vibrations generated by the fifth wheel 10 as the towing vehicle tows the towed vehicle over the road (see step 501 in Fig. 5 of example process sequence 500). The control system 100 is configured to compare the sensed vibration signals from the vibration sensor 95 to predetermined vibration data stored on the memory system 104 that are indicative of normal, slack-free coupling between the kingpin 16 and the jaw 40 (see step 502 in Fig. 5). If the sensed vibration signals match or are within an acceptable range or percentage of the predetermined vibration data, the control system 100 determines that there is no slack between the kingpin 16 and the jaw 40 as the vehicles travel over the road (see step 503 in Fig. 5). The control system 100 may also control an operator input device to visually indicate the same to the operator (see step 504 in Fig. 5).

However, in the event that there is slack between the kingpin 16 and the jaw 40 the fifth wheel 10 generates different and/or unanticipated vibrations that tend to decrease operator comfort (described above). When the control system 100 determines that the sensed vibration signals do not correspond to normal, slack-free vibrations generated between the fifth wheel 10 and the kingpin 16 (see step 505 in Fig. 5), the control system 100 indicates this determination to the operator (e.g., via the operator display unit) (see step 506 in Fig. 5) and the operator can stop the vehicles and/or input commands into the control system to adjust the position of the stop rod 50 via the actuator assembly 75. Optionally, the control system 100 can be configured to automatically adjust the position of the stop rod 50 as the vehicles are traveling over this road (see step 507 in Fig. 5). This option decreases operator involvement with the stop rod adjustment process while also decreasing undesirable vibrations and increasing operator comfort.

In certain examples, the control system 100 logs the number of times the actuator assembly 75 changes the position of the stop rod 50. After a maximum number of adjustments has occurred (e.g., the maximum number of adjustments to the position of the stop rod 50 may be five adjustments), the control system 100 indicates to the operator that the fifth wheel 10 should be serviced (e.g., the moveable components may be rebuilt or replaced). In other examples, the control system 100 determines the total number of rotations or travel distance of the stop rod 50. After the total exceeds a predetermined maximum adjustment distance (e.g., the stop rod can be adjusted to a certain maximum adjustment distance; the predetermined maximum distance of the stop rod is 5.0 inches), the control system 100 indicates to the operator that the fifth wheel 10 should be serviced. In certain examples, the control system 100 receives signals from an accelerometer and these signals are factored into determining whether or not the position of the stop rod should be adjusted. In certain examples, the control system 100 receives mileage information from the towing vehicles and once a threshold mileage is reached, the control system 100 informs the operator that the fifth wheel 10 should be serviced.

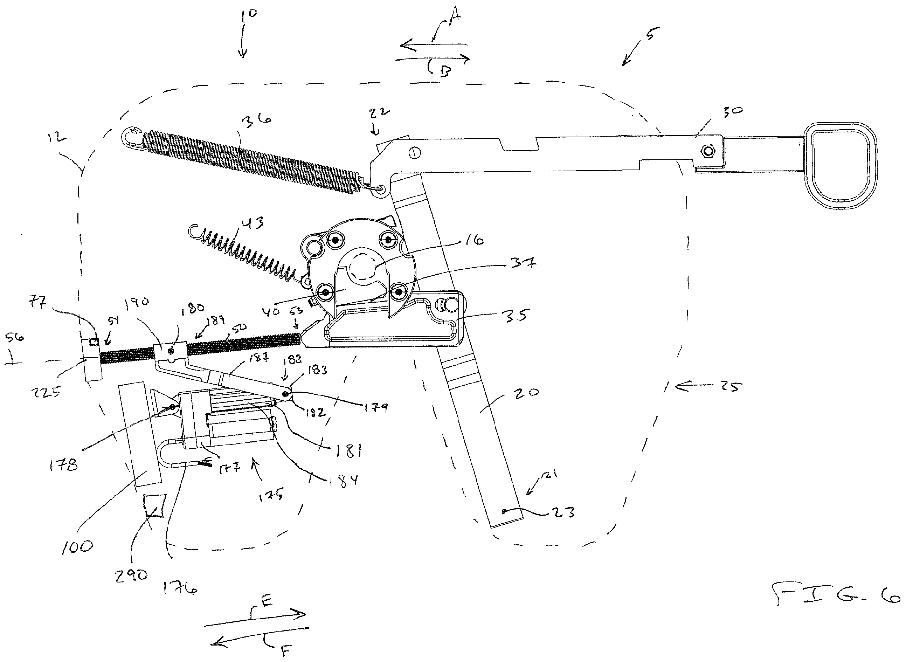

Referring now to Fig. 6, another example fifth wheel system 5 according to the present disclosure is depicted. Note that each of the example fifth wheel systems, actuator assemblies, and/or components and/or features thereof described in the present disclosure can be utilized with the other fifth wheel systems and/or the actuator assemblies described herein. For example, the sensor 77 (or similar sensor) described with reference to the fifth wheel system 5 depicted in Fig. 2 can be utilized with the fifth wheel system 5 described with reference to Fig. 6. Further note that the components of the example fifth wheel system 5 described with reference to any of the Figures of the present disclosure may be denoted with the same part numbers, however, it should be understood that the use of the same part numbers for features and/or components for certain examples should not be construed to indicate that the similarly marked systems and/or components are necessarily identical. Instead, the similarly marked systems and/or components may have varying features or characteristics. For instance, the handle 30 depicted in Fig. 1 has a different shape and length in comparison to the handle 30 depicted in Fig. 6.

The fifth wheel system 5 depicted in Fig. 6 includes an actuator assembly 175 according to the present disclosure configured to selectively move the stop rod 50. The actuator assembly 175 is coupled to at least one of the top plate 12, the flange 13, and the bottom plate 15. The actuator assembly 175 has an actuator 181 (e.g., linear actuator) that engages and moves (e.g., rotates) the stop rod 50 to thereby change the position to the stop rod 50 relative to the throat 14. The actuator assembly 175 is electrically coupled to an example control system 100 and other components of the fifth wheel system 5 (e.g., battery pack), via a wire harness 176 (partially depicted in Fig. 6). Note that the wire harness 176 is depicted as disconnected from the example control system 100 on Fig. 6 for clarity. The actuator assembly 175 can include a sensor 77 for sensing movement and/or position of the stop rod 50. In certain examples, the actuator assembly 175 can be installed on the fifth wheel 10 by the original equipment manufacturer of the fifth wheel system 5. In other examples, the actuator assembly 175 can be installed or retrofitted on to a conventional fifth wheel.

The actuator assembly 175 includes a base 177 pivotably coupled to the top plate 12, the flange 13, and/or the bottom plate 15. The base 177 defines a first axis 178 about which the actuator 181 can pivot (described further herein). The actuator 181 has a piston or arm 182 that is extendable and/or retractable from an actuator housing 184 (described further herein).

The arm 182 has a free first arm end 183 pivotably coupled to a bracket 187 at a second axis 179. The bracket 187 links the actuator 181 to the stop rod 50. The bracket 187 has a first bracket end 188 at the second axis 179 and a second bracket end 189 is coupled to the stop rod 50. In certain examples, the second bracket end 189 is coupled to the stop rod 50 at a location between a first stop rod end 53 that is oriented toward the wedge 35 and a second stop rod end 54 that is oriented away from the wedge 35. In certain examples, the second bracket end 189 is pivotably coupled to the stop rod 50 at a third axis 180.

In operation, the actuator assembly 175 receives a control signal from the control system 100 via the wire harness 176. In response to the control signal, the actuator 181 moves the stop rod 50 toward or away from the wedge 35 and/or the throat 14 (see arrow E and arrow F). When moving the stop rod 50 toward the wedge 35 and/or throat 14, the arm 182 of the actuator 181 extends from the actuator housing 184 in the first axial direction (arrow E) and arm 182 acts on the bracket 187 to also move the bracket 187 and the stop rod 50 in the first axial direction. Specifically, the arm 182 acts on (e.g., applies forces such as pushing forces) to the first bracket end 188 such that the second bracket end 189 acts on the stop rod 50. The second bracket end 189 can include a sleeve 190. As the arm 182 extends, the bracket 187 and the stop rod 50 are also moved in the first axial direction (arrow E). As such, the stop rod 50 moves toward the throat 14 and/or the wedge 35 thereby changing the location at which the stop rod 50 stops movement of the wedge 35 as the wedge 35 is moved in the first direction (arrow A) from the unlocked position to the locked position (as described above).

In certain examples, the actuator 181 pivots about the first axis 178, the first arm end 183 and the first bracket end 188 pivot about the second axis 179, and/or the second bracket end 189 pivots about the third axis 180 thereby preventing damage to the components of the actuator assembly 175 and/or promoting movement (e.g., axially translation) of the stop rod 50 which may minimize or prevent angular forces from acting on the stop rod 50. In certain examples, the top plate 12, the flange 13, the bottom plate 15, and/or other components (e.g., sleeves, guide plates) coupled to the top plate 12, the flange 13, and/or the bottom plate 15 guides movement of the stop rod 50.

Similarly, the actuator assembly 175 can move the stop rod 50 away from the wedge 35 and/or the throat 14, by retracting the arm 182 of the actuator 181 into the actuator housing 184 in the second axial direction (arrow F). As the arm 182 retracts, the arm 182 acts on the bracket 187 to also move the bracket 187 and the stop rod 50 in the second axial direction. Specifically, the arm 182 acts on (e.g., applies forces such as pulling forces) to the first bracket end 188 such that the second bracket end 189 acts on the stop rod 5 and the bracket 187 and the stop rod 50 are also moved in the second axial direction (arrow F). As such, the stop rod 50 is moved away from the throat 14 and/or the wedge 35 thereby changing the location at which the stop rod 50 stops movement of the wedge 35 as the wedge 35 is moved in the first direction (arrow A) from the unlocked position to the locked position (as described above). As described above, allowing the wedge 35 to move further in the first direction (arrow A) causes the wedge 35 to further engage the jaw 40 and encourage proper engagement between kingpin 16 and the jaw 40.

The present inventors recognized that the fifth wheel 10 of the present disclosure (and other conventional fifth wheels) may have limited space in which the actuator assembly may be located. As such, the present inventor developed the actuator assembly 175 to be generally laterally offset from the stop rod 50 (e.g., the actuator 181 is laterally offset from the stop rod 50 and the axis 56). The present inventors have also envisioned that actuator assemblies of the present disclosure (for example the actuator assembly 75 depicted in Fig. 3) may have components that are positioned axially offset from the stop rod 50, however, the types of fifth wheels on which these actuator assemblies can be coupled may be limited due to space constraints without significant modifications to the fifth wheel (e.g., modifying the flange to permit passage of the components of the actuator assembly therethrough).

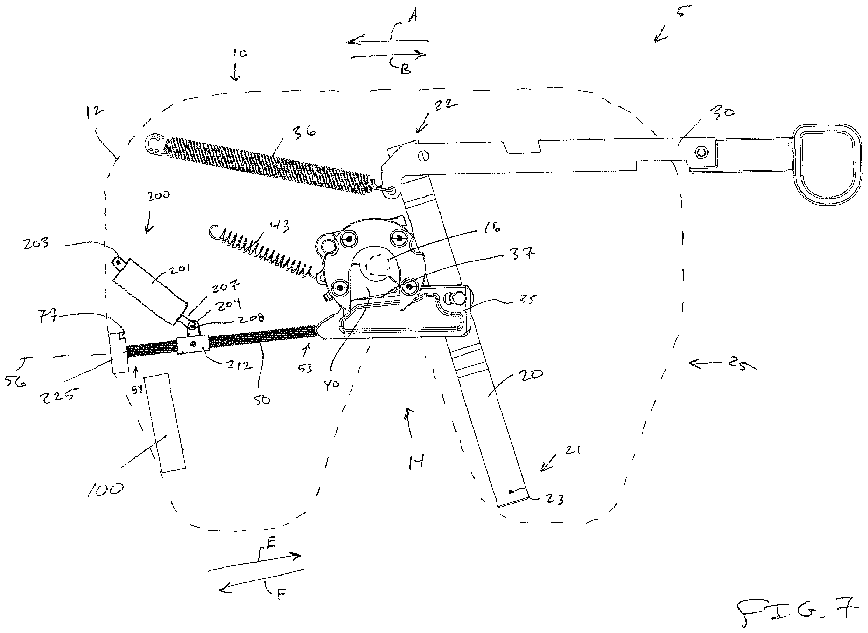

Fig. 7 depicts another example fifth wheel system 5 according to the present disclosure. The fifth wheel system 5 includes an actuator assembly 200 configured to selectively move the stop rod 50. The actuator assembly 200 is coupled to at least one of the top plate 12, the flange 13, and the bottom plate 15. The actuator assembly 175 has an actuator 201 (e.g., pneumatic cylinder) that engages and moves the stop rod 50 to thereby change the position to the stop rod 50 relative to the throat 14. The actuator assembly 200 is electrically coupled to an example control system 100 and other components of the fifth wheel system 5 (e.g., battery pack). The actuator assembly 200 can include a sensor 77 for sensing movement and/or position of the stop rod 50. The actuator 201 is optionally pivotably coupled to the top plate 12, the flange 13, and the bottom plate 15 at a first axis 203.

The actuator 200 has an arm 207 with a free first arm end 208 is pivotably coupled to a bracket 212 of the actuator assembly 200 at a second axis 204. The bracket 212 is coupled to the stop rod 50 between the first stop rod end 53 and the second stop rod end 54.

In operation, the actuator assembly 200 receives a control signal and moves the stop rod 50 toward or away from the wedge 35 and/or the throat 14 (see arrow E and F). When moving the stop rod 50 toward the wedge 35 and/or throat 14, the arm 207 extends in the first axial direction (arrow E) and arm 207 acts on the bracket 212 to also move the bracket 212 and the stop rod 50 in the first axial direction (arrow E). As such, the stop rod 50 moves toward the throat 14 and/or the wedge 35 thereby changing the location at which the stop rod 50 stops movement of the wedge 35 as the wedge 35 is moved in the first direction (arrow A) from the unlocked position to the locked position (as described above). In certain examples, the actuator 201 pivots about the first axis 203 and/or the second axis 204.

Similarly, the actuator assembly 200 moves the stop rod 50 away from the wedge 35 and/or throat 14, by retracting the arm 207 in the second axial direction (arrow F). As the arm 207 retracts, the arm 207 acts on the bracket 212 to also move the bracket 212 and the stop rod 50 in the second axial direction (arrow F). As such, the stop rod 50 is moved away from the throat 14 and/or the wedge 35 thereby changing the location at which the stop rod 50 stops movement of the wedge 35 as the wedge 35 is moved in the first direction (arrow A) from the unlocked position to the locked position (as described above).

In certain examples, the actuator 201 is configured to move the stop rod 50 a stop rod adjustment distance in the range of 0.0-10.0 millimeters.

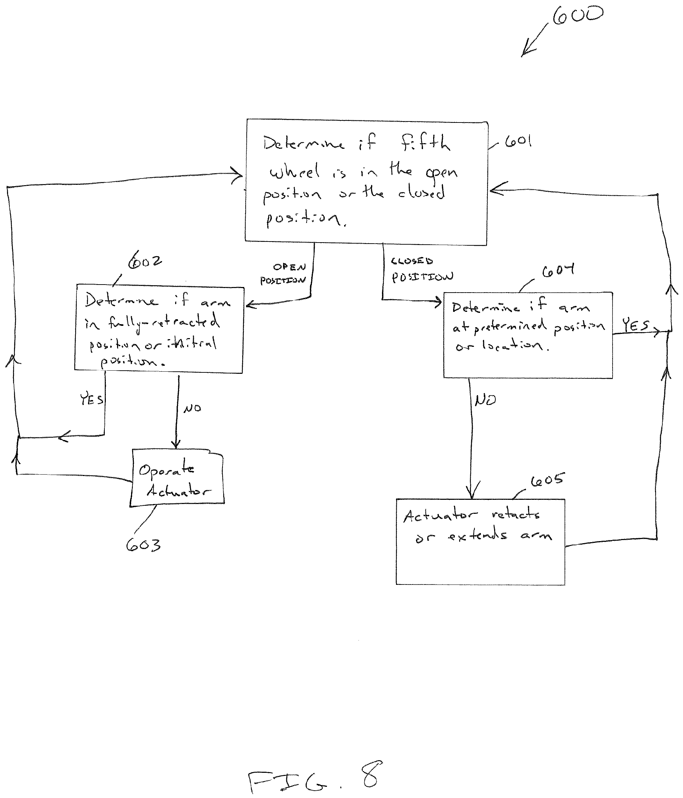

Turning now to Fig. 8, an example operational sequence for checking the status of the fifth wheel assembly 5 according to the present disclosure is depicted. The operational sequence can include the following method 600 including the outlined methods. Note that in other examples, the method 600 can include any other methods steps, components, and/or features described in the present disclosure. While the method 600 is described herein below with reference to the fifth wheel system 5 depicted in Fig. 6, the method 600 can be utilized by other example fifth wheel systems

The method 600 begins at step 601 in which the control system 100 (Fig. 4) receives signals from a fifth wheel sensor 68 and determines if the fifth wheel 10 and/or the jaw 40 is in the open position or the closed position. The fifth wheel sensor 86 can be a suitable sensor such as a proximity sensor configured to sense the relative position of the jaw 40.

If the control system 100 determines that the fifth wheel 10 is in the open position, the control system 100 is configured, at step 602, to determine the sensed position of the actuator 181 and/or the sensed length of the arm 182 extending from the actuator housing 184 based on signals from the sensor 77.

If the control system 100 determines that the arm 182 of the actuator 181 is not in a fully-retracted position or an initial position, the control system 100 at step 603 controls the actuator 181 to retract the actuator 181 into the fully-retracted position or the initial position and thereby moves the stop rod 50 into an initial stop rod position. It is advantageous to move to the arm 182 into the fully-retracted position or the initial position when connecting the fifth wheel 10 to kingpins 16 with different sizes or diameters and/or to prevent problems if the stop rod 50 was extended too far and would cause problem when coupling the fifth wheel to the kingpins 16 with different sizes or diameters. With the arm 182 is in the fully-retracted position or the initial position, the method 600 returns to step 602 and further to step 601. Alternatively, if the control system 100 determines that the arm 182 is in the fully-retracted position or the initial position, the method 600 returns to step 601 and the method 600 can repeat to thereby continuously monitor the fifth wheel system 5.

With reference again to step 601 noted above, if the control system 100 determines that the fifth wheel 10 is in the closed position, the control system 100 at step 604, is configured to determine the sensed position of the actuator 181 and/or the sensed length of the arm 182 extending from the actuator housing 184 based on signals from the sensor 77 and compare the sensed position of the actuator 181 and/or the sensed length of the arm 182 to a predetermined position or length of the arm stored to the memory system 104. The predetermined position or length of the arm 182 corresponds to the actual position of the stop rod 50 and/or the travel distance of the wedge 35 that is at least partially defined by the stop rod 50. If the sensed position or location is equal to the predetermined position or location, the method 600 returns to step 601 and the control system 100 determines that the arm 182 is in the predetermined position or location and the fifth wheel system 5 is functioning properly.

However, if the control system 100 determines that the sensed position or location is not equal to the predetermined position or location, the control system 100 at step 605 controls the actuator 181 to retract or extend the arm until the arm 182 is at the predetermined position or location. For instance, if the control system 100 determines that the length of the arm 182 is greater than the predetermined length, the control system 100 controls the actuator 181 to retract the arm 182 until the length of the arm 182 is at the predetermine length. Moving the arm 182 into the predetermined position while the fifth wheel 10 is in the closed position advantageously sets the position of the locked position of the wedge 35 and/or the travel distance of the wedge 35 to the locked position to ensure correct slack limitations are in place.

Once the arm 182 is at the predetermined position or location, the method 600 returns to step 601 and the method 600 can repeat to thereby continuously monitor the fifth wheel system 5.

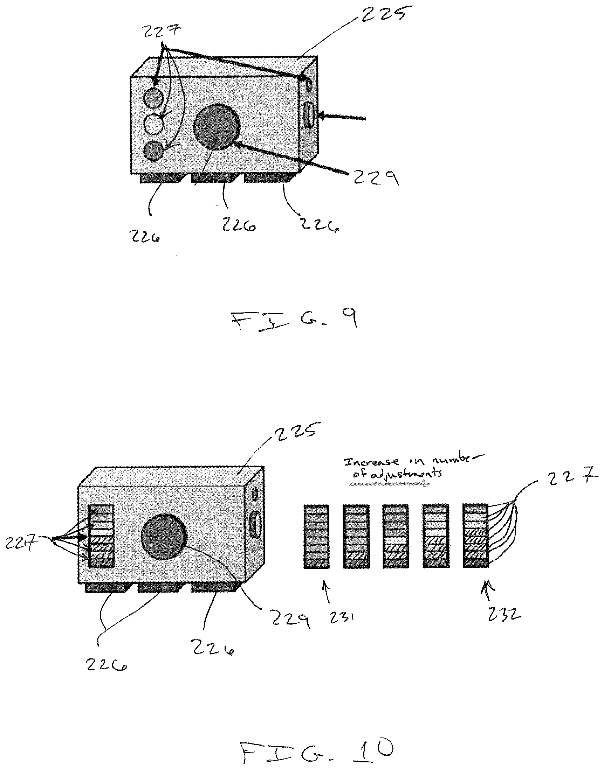

Referring now to Fig. 9-10, an example operator interface device 225 can be coupled to the fifth wheel system 5 to provide information regarding status of the fifth wheel system 5 and/or for interfacing with the control system 100 such that the operator interface device 225 can receive an input from the operator to adjust the position of the stop rod 50. The operator interface device 225 can be fixed to the fifth wheel 10, removably coupled to the fifth wheel 10, and/or remote from the fifth wheel 10, the towed vehicle, and/or the towing vehicle. Figs. 6-7 depict the operator interface device 225 coupled to the top plate 12 at location near the stop rod 50 and the perimeter flange 13. The operator interface device 225 can be part of the control system 100, and in other examples, the operator interface device 225 includes a separate control system that is similar to the control system 100 and may interface with the control system 100. Note that in other examples, the operator interface device 225 can be mounted to the cab of the towing vehicle and/or remote of the towing vehicle and towed vehicle (e.g., handheld cellular phone, laptop computer). The operator interface device 225 can include a power source (e.g., battery) or be powered by the towing vehicle.

The operator interface device 225 includes one or more connection components 226 that are configured to interface with one or more fifth wheel connection components (not depicted) which are mounted on the fifth wheel 10 and/or the actuator assembly 200. A removable cover may cover and protect the fifth wheel connection components 226. In operation, the operator connects the operator interface device 225 to the fifth wheel 10 and lights (e.g., LED) 226A-C on the operator interface device 225 illuminate based on the status of the stop rod adjustment status of the fifth wheel 10. For example, a first light 227A (e.g., green light) may illuminate when the total number of adjustments made to the position of the stop rod 50 is less than three. As such, the operator determines that the fifth wheel system 5 is not in need of maintenance or repair.

A second light 227B (e.g., yellow light) may illuminate when the number of adjustments made to the position of the stop rod 50 is three or four. As such, the operator determines that the fifth wheel system 5 should be scheduled for immediate maintenance and/or repair. A third light 227C (e.g., red light) may illuminate when the number of adjustments made to the position of the stop rod 50 is greater than four. As such, the operator determines that the fifth wheel system 5 should be taken out of service for maintenance and/or repair. Fig. 10 depicts another example operator interface device 225 with a plurality of lights 227 that illuminate as the stop rod 50 is adjusted (hatched lights indicate illuminated lights). Fig 10 includes schematic views of different states of the plurality of lights 227 the number of which progressively increases as the stop rod 50 is adjusted. For example, the first schematic set 231 of the plurality of lights 227 indicates that the stop rod 50 has been adjusted once and thereby one of the lights 227 is illuminated (see hatching on the light 227 depicting illumination) and the fifth schematic set 232 of the plurality of lights 227 indicates that the stop rod 50 has been adjusted four times and thereby four of the lights 227 are illuminated (see hatching on the lights 227 depicting illumination).

In certain examples, the operator interface device 225 includes a first button 229 that is configured to be depressed by the operator to thereby cause the stop rod 50 to be adjusted. In operation, the operator may decide that the fifth wheel 10 is not properly tightened around kingpin 16 and wish to adjust the position of the stop rod 50. The operator exits the towing vehicle to connect the operator interface device 225 with the fifth wheel 10. Once the operator interface device 225 is connected to the fifth wheel 10, the operator depresses the first button 229 which sends a signal to the control system 100 to incrementally adjust / move the stop rod 50. The incremental movement of the stop rod 50 may correspond to a preset number of rotations of the stop rod 50, a preset length (e.g., 2.0 mm) to move the stop rod 50, or moving the stop rod 50 to another preset position that is stored on the memory system 104. The control system 100 makes the adjustment to the stop rod 50 and the operator removes the operator interface device 225 and re-enters the towing vehicle.

In certain examples, the operator interface device 225 includes a second button 230 that is configured to be depressed by the operator to thereby cause the stop rod 50 to be adjusted from an initial factory state to an initial operational position state. The stop rod 50 may be in the initial factory state when first installed on the fifth wheel 10 and moving the stop rod 50 to the initial operational position such that the fifth wheel 10 properly tightens around the kingpin 16. In operation, after the stop rod 50 is installed onto the fifth wheel 10 and the fifth wheel 10 is in the closed position with the kingpin 16 locked therein, the operator connects the operator interface device 225 with the fifth wheel 10. The operator then depresses the second button 223 which sends a signal to the control system 100 to incrementally adjust / move the stop rod 50. The incremental movement of the stop rod 50 may correspond to a preset number of rotations of the stop rod 50, a preset length (e.g., 2.0 mm) to move the stop rod 50, or moving the stop rod 50 to another preset position that is stored on the memory system 104. As such, the stop rod 50 is the predetermined initial operational position. As such the operator may operate the towing vehicle to tow the towed vehicle. Note that if the operator feels that the fifth wheel 10 is not properly tightened around the kingpin 16 the operator may adjust the stop rod 50 (for example in accordance with the other examples noted above).

Note that the examples described above with the first button 229 and the second button 230 can be utilized in other examples in which the buttons 229, 230 are coupled to the fifth wheel 10, the towed vehicle, or the towing vehicle such that a separate operator interface device 225 is not necessary.

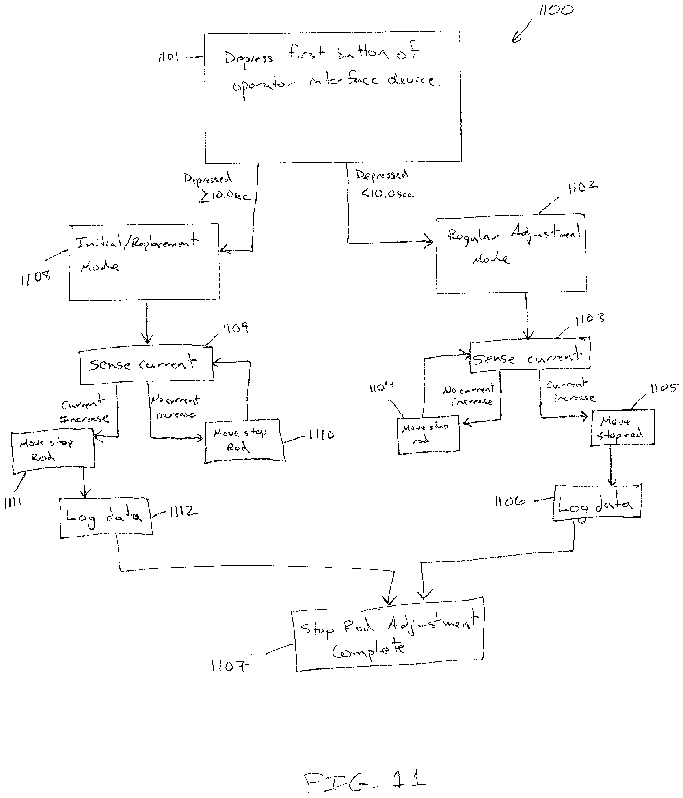

Turning now to Fig. 11, an example operational sequence for operating the operator interface device 225 of Fig. 9 to adjust the position of the stop rod 50 according to the present disclosure is depicted. The operational sequence can include the following method 1100 including the outlined method steps. Note that in other examples, the method 1100 can include any other methods steps, components, and/or features described in the present disclosure. While the method 1100 is described with reference to the fifth wheel system 5 depicted in Fig. 6, the method 600 can be utilized by other example fifth wheel systems 5 of the present disclosure.

The method 1100 begins at step 1101 in which the operator depresses the first button 229 on the operator interface device 225 which can be connected to the fifth wheel 5 (as described above) or the operator interface device 225 is located on the towing vehicle or the towed vehicle. The control system 100 having a timer 87 determines an actual time period that the operator depressed the button and compares the actual time period to a predetermined time period (e.g. 10.0 seconds) that is stored on the memory system 104.

If the control system 100 determines the first button 229 was depressed for less than the predetermined time period, the control system 100 enters a regular adjustment mode at step 1102.

The control system 100 at step 1103 operates actuator 181 and receives input from a current sensor 88 that senses a current above a threshold current (e.g., Amps) which may be caused when the stop rod 50 is in contact with the wedge 35. Note that the current sensor can be integral with the actuator 181.

At step 1104, if the current sensor 88 does not sense the current above the threshold current, the control system 100 determines that the stop rod 50 is not engaging the wedge 35 and controls the actuator 181 to move the stop rod 50 toward the throat 14 or the wedge 35. The method 1100 then returns back to step 1103 to continuously monitor for the increase in current that will correspond to when the stop rod 50 contacts the wedge 35.

With reference to step 1103, if the current sensor 88 does sense the current above the threshold current, the control system 100 determines that the stop rod 50 is engaging the wedge 35 and that the operator believes that adjustment to the stop rod 50 is necessary to properly lock the fifth wheel 10 to the kingpin 16.

At step 1105 the control system 100 then incrementally adjusts / moves the stop rod 50. The incremental movement of the stop rod 50 may correspond to a preset incremental movement that corresponds to a number of rotations of the stop rod 50, a preset length (e.g., 2.0 mm) to move the stop rod 50, or moving the stop rod 50 to another preset position that is stored on the memory system 104.

At step 1106, the control system 100 then logs the adjustment, the position, and/or the location to the memory system 104. The adjustment to the stop rod 50 is complete, at step 1107, and the operator can again drive the towing vehicle to determine / feel if the fifth wheel 10 has little or no slack and/or is properly coupled to the kingpin 16.

With reference to step 1101, if the control system 100 determines the first button 229 was depressed for more than predetermined time period, the control system 100 enters an initial/replacement adjustment mode at step 1108.

The control system 100 at step 1109 operates actuator 181 and receives input from the current sensor 88.

At step 1110, if the current sensor 88 does not sense the current above the threshold current, the control system 100 determines that the stop rod 50 is not engaging the wedge 35 and controls the actuator 181 to move the stop rod 50 toward the wedge 35. The method 1100 then returns to step 1109 to continuously monitor for the increase in current that will correspond to when the stop rod 50 contacts the wedge 35.

With reference to step 1109, if the current sensor 88 does sense the current above the threshold current, the control system 100 determines that the stop rod 50 is engaging the wedge 35 and the stop rod 50 is in a first set location at which the stop rod 50 first engages the wedge 35.

Optionally, at step 1111 the control system 100 incrementally adjusts / moves the stop rod 50 further toward the wedge 35. The incremental movement of the stop rod 50 may correspond to a preset number of rotations of the stop rod 50, a preset length (e.g., 2.0 mm) to move the stop rod 50, or moving the stop rod 50 to another preset position that is stored on the memory system 104.

At step 1112, the control system 100 logs the adjustment, the position, and/or the location to the memory system 104 of the first set location noted above and/or the adjustment, the position, and/or the location that may be optionally added in accordance to step 1111. The adjustment to the stop rod 50 is complete, at step 1107, and the operator can again drive the towing vehicle to determine / feel if the fifth wheel 10 has little or no slack and/or is properly coupled to the kingpin 16. Note that with the first set location logged to the memory system 104, the control system 100 can determine the location, the position, and/or the number of adjustments that subsequently occur based on algorithms, formulas, and/or look-up tables stored in the memory system 104. As such, the control system 100 can determine the state (e.g., beginning of adjustment life, end of adjustment life), the position, the location, the number of adjustments to the travel distance, and/or the number of adjustments implemented or remaining and report this determination to the operator for consideration regarding fleet maintenance and service. In certain examples, the control system 100 is configured to provide an alert to the operator (such as via the operator interface device 225 or remotely to a personal computer or cell phone) when the state, the position, the location, the number of adjustments to the travel distance, and/or the number of adjustments implemented or remaining for the stop rod and/or provide suggested maintenance suggestions based on a duration of time (e.g., 3-6 months) from the last noted service period. For instance, the control system 100 counts the number of adjustments made to the travel distance (e.g., the control system counts four adjustments to the travel distance) and alerts the operator (e.g., via the operator interface device 225) when the number of adjustments to the travel distance is greater than a predetermined maximum allowable adjustments (e.g., the maximum allowable adjustments is five before the fifth wheel system 5 should be taken out of service for maintenance and/or repair).

Referring back to Fig. 6, an example sensor assembly 290 can be optionally coupled to the fifth wheel 10 and in communication with the control system 100. The sensor assembly 290 includes one or more additional sensors (e.g., power management sensors, kingpin sensors, handle sensors, proximity sensors, Hall-Effect sensors, safety clip sensors, rod or wedge sensors, switches, buttons, accelerometers, IMU devices, vibration sensors, microphones) for sensing various characteristics of the fifth wheel and/or the operation of the fifth wheel, the towing vehicle, and/or the towed vehicle and sending corresponding signals to the control system 100 for use in controlling or maintaining the fifth wheel system 5, the towing vehicle, and/or the towed vehicle. The sensor assembly 290 may include an SD card slot for receiving a removable memory card and/or a power source (e.g., battery).

In certain examples, a fifth wheel system includes a fifth wheel configured to couple to a kingpin of a towed trailer. The fifth wheel includes a jaw configured to engage the kingpin, a wedge movable from an unlocked position to a locked position to urge the jaw into engagement with the kingpin, and a stop rod that sets a travel distance the wedge moves between the unlocked position and the locked position. An actuator adjusts position of the stop rod to thereby adjust the travel distance.

In independent aspects, the stop rod extends along an axis and the actuator axially moves the stop rod. In independent aspects, the actuator axially translates the stop rod. In independent aspects, the actuator moves the stop rod in a first axial direction to decrease the travel distance and a second axial direction to decrease the travel distance. In independent aspects, the actuator is a linear actuator. In independent aspects, a top plate covers the actuator. In independent aspects, a bracket links the actuator to the stop rod. In independent aspects, the actuator is laterally offset from the stop rod. In independent aspects, the fifth wheel includes a frame and the actuator is pivotably coupled to the frame at a first axis. In independent aspects, a control system controls the actuator to move the stop rod. In independent aspects, the control system is configured to count adjustments to the travel distance. In independent aspects, the control system is configured to generate an alert when number of adjustments to the travel distance is greater than a predetermined number. In independent aspects, the control system interfaces with an operator input device which is configured to receive an input to adjust position of the stop rod. In independent aspects, a vibration sensor is configured to sense vibrations generated by the fifth wheel and generate vibration data and the control system is configured to control the actuator to thereby move the stop rod and increase the travel distance when the control system determines that the vibration data contains a predetermined vibration component that corresponds to slack between the kingpin and the fifth wheel.

In certain examples, a fifth wheel system includes a fifth wheel configured to couple to a kingpin of a towed trailer includes a fifth wheel having a jaw configured to engage the kingpin, a wedge movable from an unlocked position to a locked position to urge the jaw into engagement with the kingpin, and a stop rod that engages the wedge in the locked position. An actuator adjusts position of the stop rod to thereby adjust the locked position of the wedge.

In independent aspects, the stop rod extends along an axis and the actuator axially moves the stop rod. In independent aspects, the actuator axially translates the stop rod. In independent aspects, the fifth wheel includes a throat through which the kingpin is received, and the actuator moves the stop rod in a first axial direction to move the locked position toward the throat and a second axial direction to move the locked position away from the throat. In independent aspects, the actuator is a linear actuator. In independent aspects, a top plate covers the actuator. In independent aspects, a bracket links the actuator to the stop rod. In independent aspects, the actuator is laterally offset from the stop rod. In independent aspects, the fifth wheel includes a frame and the actuator is pivotably coupled to the frame at a first axis. In independent aspects, a control system controls the actuator to move the stop rod. In independent aspects, the control system is configured to count adjustments to the locked position. In independent aspects, the control system is configured to generate an alert when a number of adjustments to the locked position is greater than a predetermined maximum allowable adjustment. In independent aspects, the control system interfaces with an operator input device which is configured to receive an input to adjust the position of the stop rod. In independent aspects, a vibration sensor is configured to sense vibrations generated by the fifth wheel and generate vibration data and the control system is configured to control the actuator to thereby move the stop rod and change the locked position of the wedge when the control system determines that the vibration data contains a predetermined vibration component that corresponds to slack between the kingpin and the fifth wheel.

In certain examples, a method of coupling a fifth wheel to a kingpin of a towed vehicle includes the steps of receiving the kingpin into the fifth wheel such that a jaw is moved into a locked position to lock the kingpin in the fifth wheel, adjusting position of a stop rod, with an actuator, to set a travel distance of a wedge between an unlocked position and a locked position, and moving the wedge along the travel distance when the kingpin is received into the fifth wheel to thereby urge the jaw into engagement with the kingpin.

In independent aspects, the adjusting position of the stop rod includes axially moving the stop rod along an axis along which the stop rod extends. In independent aspects, the actuator translates the stop rod. In independent aspects, the adjusting position of the stop rod includes moving the stop rod in a first axial direction to decrease the travel distance or a second axial direction to decrease the travel distance. In independent aspects, the method includes controlling the actuator with a control system to thereby move the stop rod. In independent aspects, the method includes counting, with the control system, number of adjustments to the travel distance. In independent aspects, the method includes generating an alert when number of adjustments to the travel distance is greater than a predetermined maximum allowable adjustment. In independent aspects, the method includes determining, with the control system, a stop rod adjustment distance based on adjustments to the stop rod. In independent aspects, the method includes determining if a jaw of the fifth wheel is in an open position or a closed position, moving the actuator such that the stop rod is in an initial stop rod position when the jaw is in the open position, and moving the actuator such that the stop rod is in a predetermined stop rod position when the jaw is in the closed position.

In certain examples, a method of coupling a fifth wheel to a kingpin of a towed vehicle includes the steps of sensing vibration from the fifth wheel, comparing the sensed vibration with predetermined vibration data to determine if there is slack between the kingpin and a jaw of the fifth wheel, and moving a stop rod with an actuator if the sensed vibration is different than the predetermined vibration data to thereby permit increased travel distance of a wedge that engages the jaw to remove slack between the jaw and the kingpin.

In independent aspects, the method includes generating an alert when the sensed vibration is different than the predetermined vibration data or when the moving the stop rod.

In certain examples, a method of coupling a fifth wheel to a kingpin of a towed vehicle including the steps of moving a stop rod with an actuator, sensing current as the actuator moves the stop rod such that when the sensed current increases above a threshold current the actuator moves the stop rod a preset incremental movement and when the sensed current does not increase above the threshold current the actuator continuously moves the stop rod until the sensed current increases above the threshold current.

In certain examples, a fifth wheel system includes a fifth wheel configured to couple to a kingpin of a towed trailer, the fifth wheel having a wedge configured to move a travel distance and urge a jaw into engagement with the kingpin and a stop rod configured to stop movement of the wedge and an actuator assembly that changes the position of the stop rod to thereby adjust travel distance of the wedge.

In certain examples, a method for changing position of a stop rod of a fifth wheel having a wedge includes the steps of determining, with a control system, a travel distance of the wedge should be increased to take up slack between the fifth wheel and a kingpin and actuating an actuator to adjust the position of the stop rod to thereby increase the travel distance of the wedge and take up additional slack between the fifth wheel and the kingpin

In certain examples, a method for monitoring position of a stop rod of a fifth wheel includes the steps of determining, with a control system, initial position of the stop rod, actuating an actuator to adjust position of the stop rod, determining an end position of the stop rod, and indicating maintenance status of the fifth wheel based on the end position of the wedge stop rod in comparison to a maximum adjustment distance.

In certain examples, an actuator assembly for a fifth wheel having a stop rod that defines a locked position or travel distance of a wedge and being configured to couple to a kingpin of towed trailer includes a bracket configured to be coupled to the stop rod and an actuator coupled to the bracket and configured to move the bracket and thereby the stop rod to thereby adjust the locked position of the wedge or a travel distance of the wedge.

In independent aspects, the actuator is configured to pivotably coupled to the fifth wheel. In independent aspects, the actuator is configured to axially translates the stop rod. In independent aspects, a base is coupled to the actuator and configured to pivotably couple to the fifth wheel. In independent aspects, the actuator is configured to interface with an operator interface device that receives an input for adjusting position of the stop rod. In independent aspects, a control system controls the actuator based on the input.

Citations to a number of references are made herein. The cited references are incorporated by reference herein in their entireties. In the event that there is an inconsistency between a definition of a term in the specification as compared to a definition of the term in a cited reference, the term should be interpreted based on the definition in the specification.

In the present description, certain terms have been used for brevity, clarity, and understanding. No unnecessary limitations are to be inferred therefrom beyond the requirement of the prior art because such terms are used for descriptive purposes and are intended to be broadly construed. The different apparatuses, systems, and method steps described herein may be used alone or in combination with other apparatuses, systems, and methods. It is to be expected that various equivalents, alternatives, and modifications are possible within the scope of the appended claims.

The functional block diagrams, operational sequences, and flow diagrams provided in the Figures are representative of exemplary architectures, environments, and methodologies for performing novel aspects of the disclosure. While, for purposes of simplicity of explanation, the methodologies included herein may be in the form of a functional diagram, operational sequence, or flow diagram, and may be described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology can alternatively be represented as a series of interrelated states or events, such as in a state diagram. Moreover, not all acts illustrated in a methodology may be required for a novel implementation.

This written description uses examples to disclose the invention and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

### CLAUSES

Clause 1. A fifth wheel system comprising:
a fifth wheel configured to couple to a kingpin of a towed trailer, the fifth wheel including:
a jaw configured to engage the kingpin;
a wedge movable from an unlocked position to a locked position to urge the jaw into engagement with the kingpin;
a stop rod that sets a travel distance the wedge moves between the unlocked position and the locked position;
an actuator that adjusts position of the stop rod to thereby adjust the travel distance.

Clause 2. The fifth wheel system according to clause 1, wherein the stop rod extends along an axis and the actuator axially moves the stop rod.

Clause 3. The fifth wheel system according to clause 2, wherein the actuator axially translates the stop rod.

Clause 4. The fifth wheel system according to clause 2, wherein the actuator moves the stop rod in a first axial direction to decrease the travel distance and a second axial direction to decrease the travel distance.

Clause 5. The fifth wheel system according to clause 1, wherein the actuator is a linear actuator.

Clause 6. The fifth wheel system according clause 1, further comprising a top plate that covers the actuator.

Clause 7. The fifth wheel system according to clause 1, further comprising a bracket that links the actuator to the stop rod.

Clause 8. The fifth wheel system according to clause 7, wherein the actuator is laterally offset from the stop rod.

Clause 9. The fifth wheel system according to clause 1, wherein the fifth wheel includes a frame and the actuator is pivotably coupled to the frame at a first axis.

Clause 10. The fifth wheel system according to clause 1, further comprising a control system that controls the actuator to move the stop rod.

Clause 11. The fifth wheel system according to clause 10, wherein the control system is configured to count adjustments to the travel distance.

Clause 12. The fifth wheel system according to clause 11, wherein the control system is configured to generate an alert when number of adjustments to the travel distance is greater than a predetermined number.

Clause 13. The fifth wheel system according to clause 10, wherein the control system interfaces with an operator input device which is configured to receive an input to adjust position of the stop rod.

Clause 14. A fifth wheel system comprising:
a fifth wheel configured to couple to a kingpin of a towed trailer, the fifth wheel including:
a jaw configured to engage the kingpin;
a wedge movable from an unlocked position to a locked position to urge the jaw into engagement with the kingpin;
a stop rod that engages the wedge in the locked position;
an actuator that adjusts position of the stop rod to thereby adjust the locked position of the wedge.

Clause 15. The fifth wheel system according to clause 14, wherein the stop rod extends along an axis and the actuator axially moves the stop rod.

Clause 16. The fifth wheel system according to clause 15, wherein the actuator axially translates the stop rod.

Clause 17. The fifth wheel system according to clause 15, wherein the fifth wheel includes a throat through which the kingpin is received, and wherein the actuator moves the stop rod in a first axial direction to move the locked position toward the throat and a second axial direction to move the locked position away from the throat.

Clause 18. The fifth wheel system according to clause 14, wherein the actuator is a linear actuator.

Clause 19. The fifth wheel system according clause 14, further comprising a top plate that covers the actuator.

Clause 20. The fifth wheel system according to clause 14, wherein the further comprising a bracket that links the actuator to the stop rod.

Clause 21. The fifth wheel system according to clause 14, wherein the actuator is laterally offset from the stop rod.

Clause 22. The fifth wheel system according to clause 14, wherein the fifth wheel includes a frame and the actuator is pivotably coupled to the frame at a first axis.

Clause 23. The fifth wheel system according to clause 14, further comprising a control system that controls the actuator to move the stop rod.

Clause 24. The fifth wheel system according to clause 23, wherein the control system is configured to count adjustments to the locked position.

Clause 25. The fifth wheel system according to clause 24, wherein the control system is configured to generate an alert when a number of adjustments to the locked position is greater than a predetermined maximum allowable adjustment.

Clause 26. The fifth wheel system according to clause 23, wherein the control system interfaces with an operator input device which is configured to receive an input to adjust the position of the stop rod.

Clause 27. A method of coupling a fifth wheel to a kingpin of a towed vehicle, the method including:
receiving the kingpin into the fifth wheel such that a jaw is moved into a locked position to lock the kingpin in the fifth wheel;
adjusting position of a stop rod, with an actuator, to set a travel distance of a wedge between an unlocked position and a locked position; and
moving the wedge along the travel distance when the kingpin is received into the fifth wheel to thereby urge the jaw into engagement with the kingpin.

Clause 28. The method according to clause 27, wherein the adjusting position of the stop rod includes axially moving the stop rod along an axis along which the stop rod extends.

Clause 29. The method according to clause 27, wherein the actuator translates the stop rod.

Clause 30. The method according to clause 27, wherein the adjusting position of the stop rod includes moving the stop rod in a first axial direction to decrease the travel distance or a second axial direction to decrease the travel distance.

Clause 31. The method according to clause 27, further comprising controlling the actuator with a control system to thereby move the stop rod.

Clause 32. The method according to clause 31, further comprising counting, with the control system, number of adjustments to the travel distance.

Clause 33. The method according to clause 32, further comprising generating an alert when number of adjustments to the travel distance is greater than a predetermined maximum allowable adjustment.

Clause 34. The method according to clause 31, further comprising determining, with the control system, a stop rod adjustment distance based on adjustments to the stop rod.

Clause 35. The method according to clause 31, further comprising:
determining if a jaw of the fifth wheel is in an open position or a closed position;
moving the actuator such that the stop rod is in an initial stop rod position when the jaw is in the open position; and
moving the actuator such that the stop rod is in a predetermined stop rod position when the jaw is in the closed position.

Clause 36. A method of coupling a fifth wheel to a kingpin of a towed vehicle, the method including:
sensing vibration from the fifth wheel;
comparing the sensed vibration with predetermined vibration data to determine if there is slack between the kingpin and a jaw of the fifth wheel; and
moving a stop rod with an actuator if the sensed vibration is different than the predetermined vibration data to thereby permit increased travel distance of wedge that engages the jaw to remove slack between the jaw and the kingpin.

Clause 37. The method according to clause 36, further comprising generating an alert when the sensed vibration is different than the predetermined vibration data or when the moving the stop rod.

Clause 38. A method of coupling a fifth wheel to a kingpin of a towed vehicle, the method including:
moving a stop rod with an actuator;
sensing current as the actuator moves the stop rod, wherein:
   when the sensed current increases above a threshold current the actuator moves the stop rod a preset incremental movement; and
   when the sensed current does not increase above the threshold current the actuator continuously moves the stop rod until the sensed current increases above the threshold current.

Clause 39. A fifth wheel system comprising:
a fifth wheel configured to couple to a kingpin of a towed trailer, the fifth wheel having a wedge configured to move a travel distance and urge a jaw into engagement with the kingpin and a stop rod configured to stop movement of the wedge; and
an actuator assembly that changes the position of the stop rod to thereby adjust travel distance of the wedge.

Clause 40. A method for changing position of a stop rod of a fifth wheel having a wedge, the method comprising:
determining, with a control system, a travel distance of the wedge should be increased to take up slack between the fifth wheel and a kingpin; and
actuating an actuator to adjust the position of the stop rod to thereby increase the travel distance of the wedge and take up additional slack between the fifth wheel and the kingpin.

Clause 41. A method for monitoring position of a stop rod of a fifth wheel, the method comprising:
determining, with a control system, initial position of the stop rod;
actuating an actuator to adjust position of the stop rod;
determining an end position of the stop rod; and
indicating maintenance status of the fifth wheel based on the end position of the wedge stop rod in comparison to a maximum adjustment distance.

Clause 42. An actuator assembly for a fifth wheel having a stop rod that defines a locked position of a wedge and being configured to couple to a kingpin of towed trailer, the actuator system comprising:
a bracket configured to be coupled to the stop rod; and
an actuator coupled to the bracket and configured to move the bracket and thereby the stop rod to thereby adjust the locked position of the wedge or a travel distance of the wedge.

Clause 43. The actuator assembly according to clause 42, wherein the actuator is configured to pivotably coupled to the fifth wheel.

Clause 44. The actuator assembly according to clause 42, wherein the actuator is configured to axially translates the stop rod.

Clause 45. The actuator assembly according to clause 42, further comprising a base that is coupled to the actuator and configured to pivotably couple to the fifth wheel.

Clause 46. The actuator assembly according to clause 42, wherein the actuator is configured to interface with an operator interface device that receives an input for adjusting position of the stop rod.

Clause 47. The actuator assembly according to clause 46, further comprising a control system that controls the actuator based on the input.

Clause 48. The fifth wheel system according to clause 10, further comprising a vibration sensor configured to sense vibrations generated by the fifth wheel and generate vibration data; and
wherein the control system configured to control the actuator to thereby move the stop rod and increase the travel distance when the control system determines that the vibration data contains a predetermined vibration component that corresponds to slack between the kingpin and the fifth wheel.

Clause 49. The fifth wheel system according to clause 23, further comprising a vibration sensor configured to sense vibrations generated by the fifth wheel and generate vibration data; and
wherein the control system configured to control the actuator to thereby move the stop rod and change the locked position of the wedge when the control system determines that the vibration data contains a predetermined vibration component that corresponds to slack between the kingpin and the fifth wheel.

## Claims

1. A fifth wheel system comprising:
a fifth wheel configured to couple to a kingpin of a towed trailer, the fifth wheel including:
a jaw configured to engage the kingpin;
a wedge movable from an unlocked position to a locked position to urge the jaw into engagement with the kingpin;
a stop rod that sets a travel distance the wedge moves between the unlocked position and the locked position;
an actuator that adjusts position of the stop rod to thereby adjust the travel distance.

2. The fifth wheel system according to claim 1, wherein the stop rod extends along an axis and the actuator axially moves the stop rod.

3. The fifth wheel system according to claim 2, wherein the actuator axially translates the stop rod.

4. The fifth wheel system according to claim 2, wherein the actuator moves the stop rod in a first axial direction to decrease the travel distance and a second axial direction to decrease the travel distance.

5. The fifth wheel system according to claim 1, further comprising a control system that controls the actuator to move the stop rod.

6. The fifth wheel system according to claim 5, wherein the control system is configured to count adjustments to the travel distance.

7. The fifth wheel system according to claim 6, wherein the control system is configured to generate an alert when number of adjustments to the travel distance is greater than a predetermined number.

8. A fifth wheel system comprising:
a fifth wheel configured to couple to a kingpin of a towed trailer, the fifth wheel including:
a jaw configured to engage the kingpin;
a wedge movable from an unlocked position to a locked position to urge the jaw into engagement with the kingpin;
a stop rod that engages the wedge in the locked position;
an actuator that adjusts position of the stop rod to thereby adjust the locked position of the wedge.

9. The fifth wheel system according to claim 8, wherein the stop rod extends along an axis and the actuator axially moves the stop rod.

10. The fifth wheel system according to claim 9, wherein the actuator axially translates the stop rod.

11. The fifth wheel system according to claim 8, further comprising a control system that controls the actuator to move the stop rod.

12. The fifth wheel system according to claim 11, wherein the control system is configured to count adjustments to the locked position.

13. The fifth wheel system according to claim 12, wherein the control system is configured to generate an alert when a number of adjustments to the locked position is greater than a predetermined maximum allowable adjustment.

14. The fifth wheel system according to claim 5, further comprising a vibration sensor configured to sense vibrations generated by the fifth wheel and generate vibration data; and
wherein the control system configured to control the actuator to thereby move the stop rod and increase the travel distance when the control system determines that the vibration data contains a predetermined vibration component that corresponds to slack between the kingpin and the fifth wheel.

15. The fifth wheel system according to claim 11, further comprising a vibration sensor configured to sense vibrations generated by the fifth wheel and generate vibration data; and
wherein the control system configured to control the actuator to thereby move the stop rod and change the locked position of the wedge when the control system determines that the vibration data contains a predetermined vibration component that corresponds to slack between the kingpin and the fifth wheel.
